# EUROPEAN PATENT SPECIFICATION

(11) **EP 0 834 827 B1**
(45) Date of publication and mention of the grant of the patent: **09.06.2004**
(21) Application number: 97117138.4
(22) Date of filing: 02.10.1997
(51) Int. Cl.: G06K 13/08

(54) **Card ejecting apparatus**
Kartenauswerfgerät
Appareil d'éjection de carte

(30) Priority: 02.10.1996 JP 26192896
(43) Date of publication of application: 08.04.1998
(73) Proprietor: BERG ELECTRONICS MANUFACTURING B.V., 5222 AV s'-Hertogenbosch (NL)
(72) Inventor: Motomu, Kajiura, Tokyo 145 (JP)
(74) Representative: Geissler, Bernhard, Dr. jur., Dipl.-Phys.

(56) References cited:
- EP-A- 0 607 848
- US-A- 5 179 871
- US-A- 5 533 906

## Description

### Background of the Invention

### Field of the Invention

This invention relates generally to an electrical connector and more particularly to an ejecting apparatus for disconnecting and removing a memory card from the connector body. Memory cards include cards with various types of storing mediums, such as IC cards (Type I), cards with various I/O functions for modems and local area networks (Type II), and hard disks (Type III).

### Brief Description of Prior Developments

To enhance the miniaturization and expand the use of electronic equipment, various types of connector devices have been developed to be used with known memory cards. Usually a connector device is used to connect a memory card to electronic equipment, such as a computer. The connector body is formed by a pair of parallel arms and a base joining the arms with an open slot opposite the base. The connector body includes a header connector with an array of contact terminals that are connected to internal units in the electronic equipment. A memory card can be inserted in the slot and guided along the arms. The contact terminals of the memory card connect with the contact terminals of the header at the base, thereby not only electrically connecting both terminals with each other but also mechanically fixing the memory card in place.

Some connector devices are also provided with an ejecting apparatus that disconnects (i.e. unplugs) the contact terminals of the memory card from the contact terminals of the connector body and mechanically moves the memory card from the connector device.

Generally, the ejecting apparatus is provided with an eject plate that slides along the arms of the connector body. The eject plate has at least one engaging tab which engages the edge of the memory card when the memory card is inserted into the connector body and is moved to the connected position. The eject plate is coupled with a link member pivotally mounted on the connector body. A movable push rod is coupled with the end of the link member and generally moves in the direction opposite to which the memory card is inserted or removed. The link member acts as a lever using the pivot point on the connector body as a fulcrum and transmits the force acting on the push rod to the eject plate.

To eject the memory card from the connector device, the push rod, which often projects outside the electronic equipment is pushed in, which thereby causes the link member to rotate, moving the eject plate toward the slot of the connector body. This movement causes the memory card, whose edge has been engaged with the tab section of the eject plate to be disconnected from the connector body in such a manner that the card is separated from the contact terminals of the connector body. Thus, even when the force acting on the push rod is small, the link member acts as a lever and exerts a larger force on the eject plate, enabling the memory card to be disconnected and removed. Generally, the link member and eject plate are mounted on the connector body using a cover plate.

As electronic equipment has been getting more compact and more sophisticated in recent years, it is desirable that the push rod be flush and the connector body with the inserted memory card reside completely inside of the electronic equipment. Thus, when the push rod is pushed in to eject the memory card, only a small length of the memory card may project from the electronic equipment, making it difficult to manually grasp and handle the card. The amount of the memory card projecting from the connector could be made larger by lengthening the link member of the ejecting mechanism to increase the moving distance of the eject plate. This, however, would make the ejecting apparatus larger, requiring a larger installation space. Also, the projecting force of the push rod is transferred to the link member with increasing proportion to the length of the link member which could cause the memory card to forcefully eject from the connector. Therefore, it is difficult to meet the demands for the miniaturization of electronic equipment.

US-A-5 179 871 discloses an ejecting apparatus comprising the features in the preamble of claim 1. EP-A-0 607 848 discloses an IC card ejecting mechanism including an ejecting lever that turns about two non-stationary fulcrums, one after the other, to eject the IC card from the underlying connector apparatus.

### Summary of the Invention

It is, accordingly, an object of the present invention to provide a compact ejecting apparatus with a simple structure capable of disconnecting the contact terminals of the memory card from the connector body and increasing the amount of memory card projecting from the connector body.

The foregoing object is accomplished by providing an ejecting apparatus as defined by claim 1 for disconnecting and removing a memory card from a connector body that electrically and mechanically connects to the memory card by an array of contact terminals. The ejecting apparatus includes an eject plate that has an engaging tab for engaging with the memory card and is guided in an insertion and removal direction in which the memory card is inserted into and removed from the connector body. A link member is rotatably mounted on a pivot on the connector body so that it may be moved rotationally, with the pivot acting as a fulcrum. A reciprocable push rod contacts one end of the link member to move the link member rotationally around the fulcrum. A first force supplying section on the link member disconnects the memory card from the contact terminals of the connector body by moving the eject plate when the link member is initially rotated by the push rod. A second force applying section on the link member moves the memory card further in the removal direction by directly pushing the memory card after the card has been disconnected from the connector terminals. The first force applying section is located on the link member between the fulcrum and the second force applying section of the link member.

In the present invention, when the link member of the ejecting apparatus is initially rotated by the push rod, the first force applying section moves the eject plate in the removal direction of the memory card. As a result, the eject plate causes the engaging tabs to engage the memory card and disconnect the contact terminals of the memory card from the contact terminals of the connector body. Once the memory card has been disconnected from the terminals, the second force applying section of the link member begins to push the memory card directly. Since the second force applying section is a greater distance from the fulcrum than the first force applying section, this allows the memory card to move further out of the connector body beyond the moving distance of the eject plate, thus enabling a larger part of the memory card to project from the electric equipment.

The link member of the present invention is formed as a parallel stepped structure having an upper section on one side of the fulcrum and a lower parallel section on the other side of the fulcrum. The eject plate is formed into the reverse stepped structure to that of the link member and guides the distal end of the link member along between the eject plate and the connector body. Thus, when the distal end of the link member extends a great distance past the fulcrum, the movement of the link member is guided smoothly, enabling the memory card to be removed reliably.

Furthermore, it is desirable that the eject plate should have a roughly rectangular opening about in the middle of the width of the memory card and that the first force applying section of the link member has an upward bump projecting into the opening, the bump having an arced shape curved convexly in both directions. With this structure, at both the time of removal and insertion of the memory card, the front edge of the opening of the eject plate comes into contact with the curved surface of the upward projecting bump forming the first force applying section, thereby transmitting force smoothly from the push rod to the link member to the eject plate.

It is desirable that the second force applying section on the link member should be formed by a downward tab at least twice the distance from the fulcrum that the first force applying section is located. Thus, the link member is formed by a very simple structure.

Furthermore, it is desirable that the second force applying section should come into contact with the memory card only after the eject plate disconnects the memory card from the connector terminals. This structure transmits a large force to the memory card when the card is engaged with the contact terminals of the connector and causes the memory card to be disconnected from the connector terminals before the card is moved by the second force applying section.

### Brief Description of the Drawings

FIG. 1 is a schematic exploded view in perspective of an ejecting apparatus according to a preferred embodiment of the present invention, together with a header connector;
FIG. 2 is a schematic sectional view illustrating the position of each member in the ejecting apparatus when the memory card is inserted;
FIG. 3 is a schematic sectional view illustrating how the link member is engaged with the eject plate in FIG. 2;
FIG. 4 is a schematic sectional view illustrating the position of each member in the ejecting apparatus after the memory card is removed;
FIG. 5 is a schematic sectional view illustrating how the link member is engaged with the eject plate in FIG 4; and
FIG. 6 (A) is an overall plan view and FIG. 6 (B) is a front view of a connector device provided with the ejecting apparatus according to the embodiment of the present invention.

### Description of the Preferred Embodiment

Hereinafter, referring to the accompanying drawings, a preferred embodiment of the present invention will be explained.

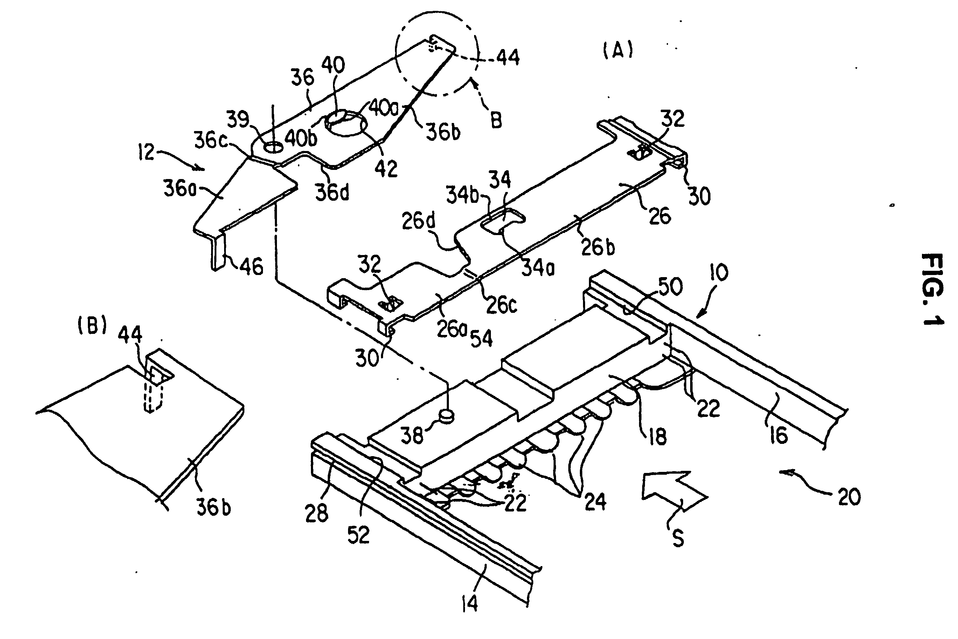

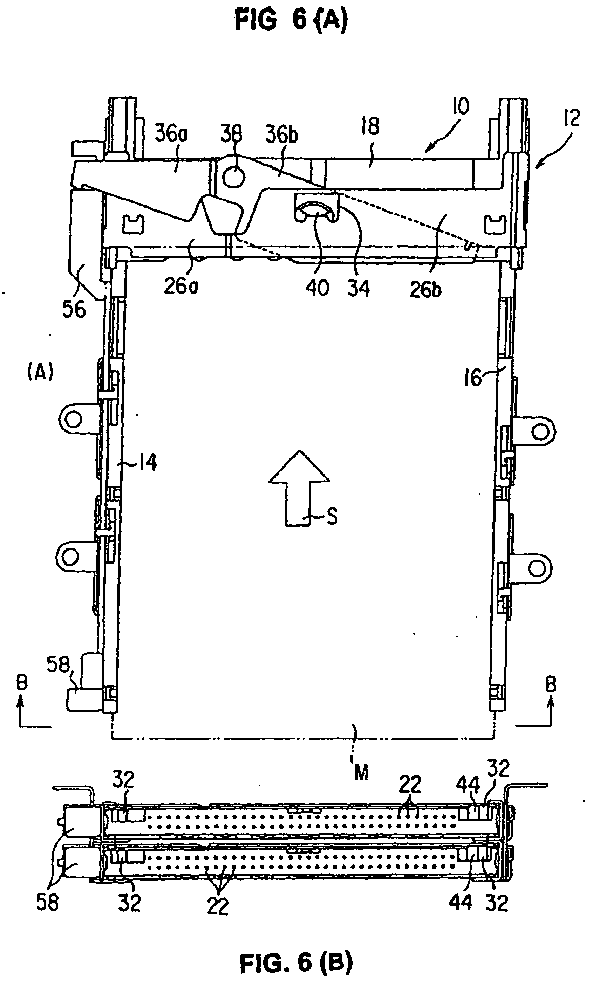

FIGS. 1 to 6 (A) show a connector device using an ejecting apparatus according to the present invention. The connector device includes a header connector 10, which is part of the connector body, and an ejecting apparatus 12. As shown in FIG. 6 (B), it is often desirable that two connector devices should be put one on top of another, i.e. the upper connector device and the lower connector device. Since the upper connector device has basically the same structure as that of the lower connector device, explanation of only the upper one will be given.

The header connector 10 is molded from suitable resin material and has a pair of parallel arms 14, 16 and a base 18 connecting integrally with these arms 14, 16. Between these arms 14, 16, a slot 20 is formed into which a memory card M (see FIG. 6 A) is inserted in the direction of arrow S. Guide grooves (not shown) that guide the side edges of the memory card M are provided in the sides facing each other of the arms 14, 16. The memory card M may be a card having various types of storing mediums, such as an IC card, a hard disk, a magneto-optical disk, or a card with various I/O functions for modems and local area networks, for example.

A large number of contact terminals such as pin terminals 22 are arranged at the base 18 on the header connector 10 in such a manner that they pierce through the base. The contact terminals of the memory card M fit on the ends of those pin terminals 22 projecting into the opening between the arms 14, 16, thereby electrically and mechanically connecting the header connector 10 to the memory card M. The inner ends of the pin terminals 22 (now connected to the contact terminals of the memory card M) are connected to the electric circuitry formed on the circuit board of the electronic equipment (not shown).

To prevent the memory card M from being inserted erroneously, it is desirable that erroneous insertion prevention means should be provided on the arms 14, 16 or base 18 of the header connector 10. One erroneous insertion prevention means may be guide grooves differing in shape in the arms 14, 16 or that at least one projection is provided in an asymmetrical position on the base 18. In this case, a projection or grooves are made on the memory card M as well. Reference symbol 24 indicates card bus shields that come into contact with the surface of the memory card M. The card bus shields, which are arranged along the width of the header connector 10 between the arms 14, 16, not only ground the card surface, but also function as an electromagnetic shield between the inside and outside of the memory card M near the contact terminals.

The ejecting apparatus 12 of the embodiment is provided with an eject plate 26 formed of a thin metal plate. The eject plate 26 extends substantially the width of the memory card M, that is, between the arms 14, 16 of the header connector 10. The edges on both sides of the eject plate slide freely on the arms 14,16. In the embodiment, hooked claws 30, formed at the edges on both sides of the eject plate, are fitted in the guide grooves 28 on the outside of the arms 14, 16 which allow the eject plate to move in both the insertion direction S and in the removal direction. (The insertion direction S is toward the rear of the connector, i.e. toward the header 10 and the removal direction is toward the front of the connector, i.e. toward slot 20).

The slidable eject plate 26 has a lower parallel plate section 26a arranged closer to the header connector 10 and an upper plate section 26b raised slightly above the lower plate section 26a. The lower and upper plate sections 26a, 26b are connected at a step section 26c to form an integral, parallel stepped structure. At least one and preferably two engaging tabs 32, 32 that engage the edge of the memory card M project downward from the plate sections 26a, 26b, respectively. The engaging tabs 32, 32 are formed by cutting out and bending the plate material of the plate sections 26a, 26b near the respective side edges. When the eject plate 26 is installed on the header connector 10, the engaging tabs project into the slot 20 so as to be able to engage the edge of the memory card M.

At the step section 26c of the eject plate 26, a recessed or cutout section 26d is formed. The cutout section 26d receives the cutout section of a link member 36, which will be described later. An opening 34 is made in the upper plate section 26b for interlocking with the link member 36. The opening 34, which is roughly rectangular, is positioned in the center of the eject plate 26, between the arms 14, 16 and centered between the engaging tabs 32, 32. The front rim 34a of opening 34 has a downward stopper tab 35. The stopper tab 35 is formed by cutting out and bending down the plate material. The rear rim 34b of the opening 34 is linear. It is desirable that the stopper tab 35 should be positioned in the center between the arms 14,16 of the header connector 10. Also the engaging tabs 32, 32 are arranged symmetrically on the eject plate 26 with the stopper tab 35 in the center.

The ejecting apparatus 12 further includes the link member 36 for moving the eject plate 26 in the insertion direction and removal direction of the memory card M. Like the eject plate 26, the link member 36 is formed of a thin metal plate but has the reversed stepped structure of eject plate 26. This link member 36 has an upper parallel plate section 36a, lower parallel plate section 36b and a step section 36c between the plate sections 36a, 36b. At the step section 36c, a recessed section or (cutout) 36d is formed that receives the cutout 26d of the eject plate 26. The link member 36 is installed on the base 18 of the header connector 10 by inserting a pivot pin 38 rising from the base 18 into a through hole 39 in the link member 36. The link member 36 is positioned on the pin 38 in such a manner that the recessed section 36d engages with the recessed section 26d of the eject plate 26. Therefore, with the ejecting apparatus 12 installed on the header connector 10, the upper plate section 36a of the link member 36 is arranged above the lower plate section 26a of the eject plate 26 and the lower plate section 36b of the link member 36 is placed under the upper plate section 26b of the eject plate 26. The hooked claws 30, 30 of the eject plate are fitted in the guide grooves 28, 28 of the header connector 10, respectively, preventing the through hole 39 in the link member 36 from coming off the pivot pin 38.

The link member 36 has an upward bump section 40 that is inserted in the opening 34 in the eject plate 26 and forms a first force applying section. Link member 36 also has an opening 42 adjacent to the upward bump section 40. The opening 42 receives the stopper tab 35 projecting from the plate section 26b of the eject plate when the eject plate 26 and the link member 36 are installed on the arms 14, 16 and pivot pin 38 respectively. The upward bump section 40 is formed by cutting the opening 42 out of the plate material and bending a portion of the link member 36 upward. The rear rim 40b of the upward bump section (on the rear side in the insertion direction S) and the front rim 40a on the front side are both curved to form convexed arcs. The rear rim 40b is formed by the conical raised surface of the upward bump and the front rim 40a is the thin edge of the metal of the link member 36. The top of the upward bump section 40 does not project above the surface of the upper plate section 26b of the eject plate 26. Therefore, front rim 40a faces the stopper tab 35 which is hanging down from the front rim 34a of the opening 34 and rear rim 40b faces the flat rear rim 34b of the opening 34 when the link member 36 and eject plate 26 are installed on the head connector 10.

On the distal end of the link member 36, a downward tab 44 acts as a second force applying section. The tab 44 is formed near the edge of the plate section 36b by cutting out the plate material of the link member 36 and bending the tab down. The lower plate section 36b of the link member 36 is formed so as to have a shorter length than the eject plate 26 so as to prevent interference by the engaging tabs 32 of the eject plate 26 when the link member 36 is rotated about the pivot pin 38. The tab 44 is positioned so that it only engages the edge of the memory card M when the card M is disconnected completely from the pin terminals 22 of the connector and does not engage with the card M when the card M is still connected to the pin terminals 22. This enables the tab 44 to move the card further in the removal direction, going beyond the engaging tabs 32. To prevent the tab 44 of the link member 36, and the engaging tabs 32 of the eject plate 26 from interfering with the base 18 of the header connector 10, grooves 50, 52 are made in the corresponding positions on the base 18. The center groove 54 prevents interference with the stopper tab 35 hanging down from the front rim 34a of the opening 34. The projecting tab 44 is formed by cutting out a portion of the link member 36 and bending it down. However, it is not limited to that shape. For instance, it may take another suitable form, such as a curved surface.

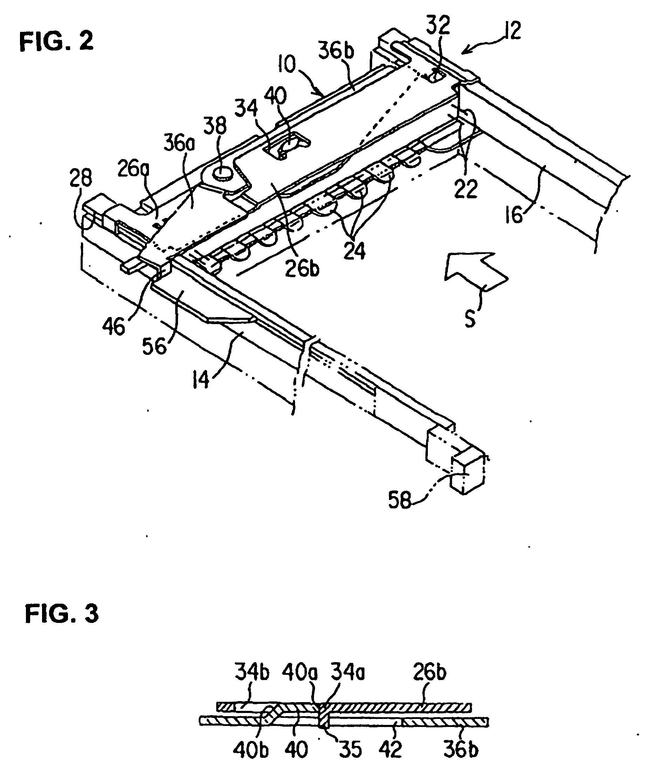

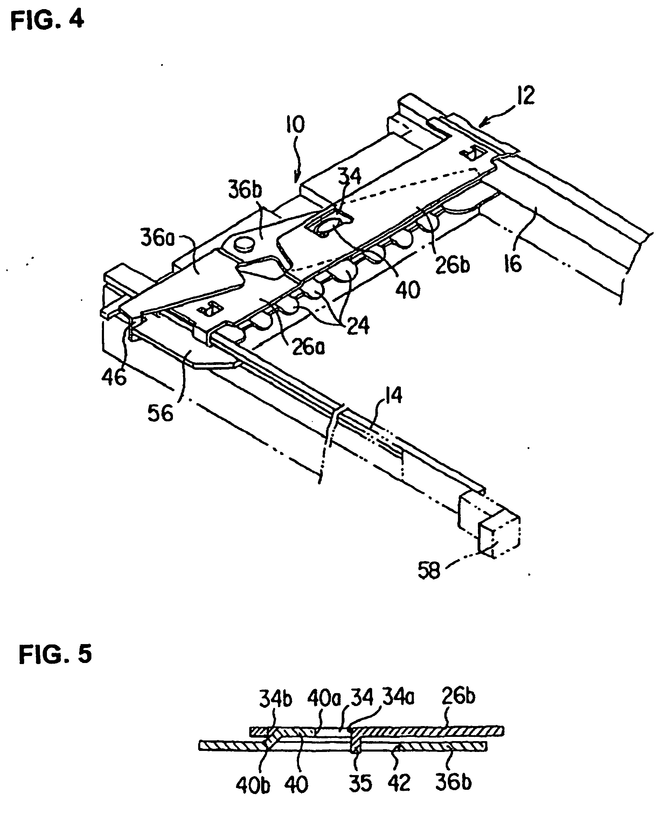

The tip of the upper plate section 36a of the link member 36, that is, the shorter end from the pivot pin 38, projects from the header connector 10. A linking tab 46 hangs down from the tip of the plate section 36a and is linked with the rear end of a push rod 56 (see FIG. 2 and FIG. 4).

The push rod 56 in the preferred embodiment is arranged along the outside of the arm 14 so that the rod may slide freely. At the front end of the push rod 56, an operation button 58 that can be pushed in with a finger is provided. When two connector devices are arranged in a two-layered structure having an upper connector device and a lower connector device as in the disclosed embodiment, the two operation buttons 58 for the two push rods 56 may be positioned on the same side as shown in FIG. 6 (B) or be positioned on the opposite sides.

In the disclosed embodiment, the fulcrum of the link member 36 is located at the fixed position by the pivot pin 38 inserting into the through hole 39. Alternatively, the fulcrum may be moved as the link member 36 is rotated in a similar manner to the way that the curved surface of the upward bump section 40 engages with the flat surface of the stopper tab 35.

Next, the operation of the connector device will be explained. FIG. 2 shows the ejecting apparatus 12 into which a memory card M (not shown) has been inserted. FIG. 4 and FIG. 6 (A) schematically illustrate the ejecting apparatus from which the memory card M (not shown) has been removed.

As shown in FIG. 2, when the memory card M is connected to the pin terminals 22 of the header connector 10, the eject plate 26 is moved by the engaging tab 32 to the rear of the connector device. The upward bump section 40 is pushed back by the slidable eject plate 26 and the link member 36 is rotated counterclockwise on the pivot pin 38. This causes the push rod 56 to be pushed forward by the link tab 46 of the link member 36, with the operation button 58 projecting forward (i.e. in the opposite direction to the insertion direction S).

When the memory card M is removed from the connector device, the operation button 58 is pushed in the insertion direction S. This moves the linking tab 46 in the insertion direction S, which forces the link member 36 to rotate clockwise on the pivot pin 38, which in turn pushes the eject plate 26 in the removal direction, (that is, in the opposite direction to the insertion direction S). At the upward bump section 40, the curved front rim 40a is engaged with the stopper tab 35 as shown in FIG. 3. As the link member 36 rotates, the front rim 40a smoothly rotates on the flat surface of the stopper tab 35, thereby transmitting force from the link member 36 to the eject plate 26. This enables the eject plate 26 to move in the removal direction. The claw section 30 of the eject plate moves along the guide grooves 28 in the arms 14, 16 of the header connector 10.

The movement of eject plate 26 forces the engaging tab 32 to contact the edge of the memory card M, which transmits the force of the link member 36 to the memory card M, thereby disconnecting the contact terminals of the memory card M completely from the pin terminals 22. Since the upward bump section 40 is located relatively close to the pivot pin 38 which serves as a fulcrum, the memory card M can be disconnected from the connector terminals easily without exerting a large force on the push rod 56.

When the push rod 56 is pressed further, the link member 36 is rotated further clockwise, which causes the downward tab 44 at the distal end of the plate section 36b to come into direct contact with the edge of the memory card M. The memory card M was heretofore in contact with the engaging tab 32 and moving in the removal direction but not going beyond the movement limit of the engaging tab 32. The downward tab 44 now moves the memory card M further in the removal direction until the card projects from the connector device and the electronic equipment. The tab 44 is positioned at the distal end of the plate section 36b from the pivot pin 38. The memory card M is thus disconnected from the contact terminals and removed from the connector body by a distance greater than the distance the push rod 56 is moved.

When the memory card M is inserted, the link member 36 and eject plate 26 are moved in the reverse order of what has been explained above. Specifically, when the memory card M is inserted in the slot 20 between the arms 14, 6, the front end of the memory card M first comes into contact with the tab 44 of the link member 36, which rotates the link member 36 counterclockwise around the pivot pin 38. The upward bump section 40 of the link member 36 causes the rear rim 40b to come into contact with the rear rim 34b of the opening 34 in the eject plate 26 as shown in FIG. 5. The link member 36 moves the eject plate 26 in the insertion direction S as the curved surface 40b moves rotationally along the rear rim 34b. Then the memory card M comes into contact with the engaging tabs 32, 32 and pushes the eject plate 26 in the insertion direction, which allows the memory card M to connect with the pin terminals 22. As shown in FIG. 3, the eject plate 26 rotates the link member 36 further counterclockwise, causing the curved front rim 40a of the bump section 40 to move rotationally on the stopper tab 35 which is hanging down from the front rim 34a of the opening 34, and moves the link member 36 to the installed position shown in FIG. 2. The push rod 56 is moved outward by the link tab 46 of the link member 36, which causes the operation button 58 to project from the outside surface of the electronic equipment. Meanwhile, the installed memory card has its surface grounded by the cardbus shield 24, thereby preventing the influence of electromagnetic waves.

Because the bump section 40 near the pivot pin 38 serves as a pivotal fulcrum to leverage the eject plate 26 in the removal direction, a large force can be exerted to disconnect the contact terminals of the memory card M from the contact terminals 22. In addition, because the tab 44 is a greater distance from the pivot pin 38 than the engaging tabs 32, the tab 44 pushes directly on the memory card M (after being removed from the pin terminals 22) and directly moves the card. The memory card M can not only be moved quickly off the contact terminals but also can be removed substantially from the connector body so the card is manually accessible. Furthermore, since the eject plate 26 and link member 36 are installed directly on the header connector 10, a cover plate, which is needed in a conventional ejecting apparatus, is not necessary. The apparatus is thus thinner and more compact, and the construction is straight forward to operate.

As presently described, the ejecting apparatus of the present invention causes the first force applying section of the link member to be rotated by the initial movement of the push rod. The link member moves the eject plate to disconnect the contact terminals of the memory card from the contact terminals of the connector. With further movement of the push rod, the second force applying section then pushes directly on the memory card (that is now disconnected from the connector terminals) and thereby further moves the card in the removal direction. This efficient operation of the ejecting mechanism is effected by locating the first force applying section (upward bump 40) on the link member between the fulcrum (i.e. pivot pin 38) and the second force applying section (tab 44). Easy manual handling of the memory card is facilitated by making the amount of projection of the memory card larger, especially with the compact, simple configuration of the present invention.

## Claims

1. An ejecting apparatus (12) for disconnecting and removing a memory card from a connector body (10) that electrically and mechanically connects to the memory card (M) by an array of contact terminals (22), said ejecting apparatus (12) comprising
a) an eject plate (26) that has an engaging tab (32) for engaging with said memory card (M) wherein said eject plate (26) is guided in an insertion direction in which the memory card is inserted into the connector body (10), and a removal direction in which the memory card (M) is removed from the connector body (10);
b) a link member (36) rotatably mounted on a fulcrum (38) on said connector body (10) so that the link member (36) may be moved rotationally;
c) a reciprocal push rod (56) that contacts one end of the link member (36) to move the link member (36) rotationally around the fulcrum (38);
d) a first force applying section (40, 40a) on said link member (36) that disconnects the contact terminals of the memory card (M) from the contact terminals (22) of the connector body (10) by moving the eject plate (26) in the removal direction when the link member (36) is moved rotationally by the push rod (56); and
e) a second force applying section (44) on said link member (36) that moves the memory card (M) farther in the removal direction after the terminals of the memory card (M) have been disconnected from the connector terminals, wherein said first force applying section (40, 40a) is located on said link member (36) between said fulcrum (38) and said second force applying section (44),
wherein said memory card (M) is initially moved in the removal direction by said engaging tab (32) of the eject plate (26),
**characterized in that**
after said initial movement in the removal direction, said memory card (M) is moved farther in the removal direction by said second force applying section (44) directly pushing the memory card (M).

2. An ejecting apparatus (12) according to claim 1, **characterized in that** said link member (36) is a stepped structure having an upper section (36a) on one side of the fulcrum (38) and a lower parallel section (36b) on the other side of the fulcrum (38), and said eject plate (26) is a reverse stepped structure to that of the link member (36) and said eject plate (26) guides the lower parallel section (36b) of the link member (36) along between the eject plate (26) and the connector body (10).

3. An ejecting apparatus (12) according to claim 1, **characterized in that** said eject plate (26) has a roughly rectangular opening (34) in the center of the width of the memory card (M) and said link member (36) has an upward bump (40) projecting into the opening (34), the upward bump (40) having arced edges (40a) curved convexly in both directions in which the memory card (M) is inserted and removed.

4. An ejecting apparatus (12) according to claim 1 **characterized in that** the second force applying section (44) is located on said link member (36) at least twice the distance from the fulcrum (38) than the first force applying section (40, 40a).

5. An ejecting apparatus (12) according to claim 1 **characterized in that** the second force applying section (44) is located on said link member (36) approximately three times the distance from the fulcrum (38) than the first force applying section (40, 40a).

## Patentansprüche

1. Ein Auswurfgerät (12) zum Trennen und Entfernen einer Speicherkarte von einem Verbinderkörper (10), welcher elektrisch und mechanisch sich mit der Speicherkarte (M) durch ein Array von Kontaktanschlüssen (22) verbindet, wobei das Auswurfgerät (12) aufweist:
a) eine Auswurfplatte (26), welche eine Eingriffslasche (32) aufweist, um mit der Speicherkarte (M) in Eingriff zu gelangen, wobei die Auswurfplatte (26) in einer Einfügerichtung geführt ist, in der die Speicherkarte in den Verbinderkörper (10) eingeführt wird und in einer Entnahmerichtung, in der die Speicherkarte (M) von dem Verbinderkörper (10) entfernt wird;
b) ein Verbindungsglied (36), welches drehbar auf einer Drehachse (38) an dem Verbinderkörper (10) befestigt ist, so dass das Verbindungsglied (36) drehend bewegt werden kann;
c) eine Umkehrdruckstange (56), welche ein Ende des Verbindungsglieds (36) berührt, um das Verbindungsglied (36) um die Drehachse (38) drehbar zu bewegen;
d) ein erster Kraftaufbringungsbereich (40, 40a) an dem Verbindungsglied (36), welcher die Kontaktanschlüssc der Speicherkarte (M) von den Kontaktanschlüssen (22) des Verbinderkörpers (10) trennt, indem die Auswurfplatte (26) in der Entnahmerichtung bewegt wird, wenn das Verbindungsglied (36) drehbar durch die Druckstange (56) bewegt wird; und
e) ein zweiter Kraftaufbringungsbereich (44) auf dem Verbindungsglied (36), der die Speicherkarte (M) weiter in Entnahmerichtung bewegt, nachdem die Anschlüsse der Speicherkarte (M) von den Anschlüssen des Verbinders getrennt wurden, wobei der erste Krafiaufbringungsbereich (40, 40a) an dem Verbindungsglied (36) zwischen der Drehachse (38) und dem zweiten Kraftaufbringungsbereich (44) angeordnet ist, wobei
die Speicherkarte (M) anfänglich durch die Eingriffslasche (32) der Auswurfplatte (26) in Entnahmerichtung bewegt wird; **dadurch gekennzeichnet, dass**
die Speicherkarte (M), nach der anfänglichen Bewegung in Entnahmerichtung, durch den zweiten Kraftaufbringungsbereich (44), welcher direkt die Speicherkarte (M) drückt, weiter in Entnahmerichtung bewegt wird.

2. Ein Auswurfgerät (12) gemäß Patentanspruch 1, **dadurch gekennzeichnet, dass** das Verbindungsglied (36) eine abgestufte Struktur aufweist, welche einen oberen Bereich (36a) auf einer Seite der Drehachse (38) aufweist und einen unteren parallelen Bereich (36b) an der anderen Seite der Drehachse (38), und wobei die Auswurfplatte (26) eine zu dem Verbindungsglied (36) umgekehrt abgestufte Struktur ist und die Auswurfplatte (26) den unteren parallelen Bereich (36b) des Verbindungsglieds (36) zwischen der Auswurfplatte (26) und dem Verbinderkörper (10) entlang führt.

3. Ein Auswurfgerät (12) gemäß Patentanspruch 1, **dadurch gekennzeichnet, dass** die Auswurfplatte (26) eine grob rechteckige Öffnung (34) in der Mitte der Breite der Speicherkarte (M) aufweist und dass das Verbindungsglied (36) einen nach oben gerichteten Anschlag (40) aufweist, welcher in die Öffnung (34) hineinragt, wobei der nach oben gerichtete Anschlag (40) gebogene Ecken (40a) aufweist, welche in beiden Richtungen, in denen die Speicherkarte (M) eingeführt und entfernt wird, konvex gekrümmt ist.

4. Ein Auswurfmechanismus (12) gemäß Patentanspruch 1, **dadurch gekennzeichnet, dass** der zweite Kraftaufbringungsbereich (44) an dem Verbindungsglied (36) in zumindest der doppelten Entfernung von der Drehachse (38) angeordnet ist, verglichen mit dem ersten Kraftaufbringungsbereich (40, 40a).

5. Ein Auswurfmechanismus (12) gemäß Patentanspruch 1, **dadurch gekennzeichnet, dass** der zweite Kraftaufbringungsbereich (44) an dem Verbindungsglied (36) in ungefähr dem dreifachen Abstand von der Drehachse (38) angeordnet ist, verglichen mit dem ersten Kraftaufbringungsbereich (40,40a).

## Revendications

1. Dispositif d'éjection (12) servant à déconnecter et retirer une carte de mémoire d'un corps de connecteur (10) qui est connecté électriquement et mécaniquement à la carte de mémoire (M) par un réseau de bornes de contact (22), ledit dispositif d'éjection (12) comprenant:
a) une plaque d'éjection (26) qui possède une patte d'engagement (32) destinée à coopérer avec ladite carte de mémoire (M), ladite plaque d'éjection (26) étant guidée dans une direction d'insertion, dans laquelle la carte de mémoire est insérée dans le corps de connecteur (10), et une direction de retrait, dans laquelle la carte de mémoire (M) est retirée du corps de connecteur (10);
b) un élément de liaison (26) monté rotatif sur un pivot (38) sur ledit corps de connecteur (10) de sorte que l'élément de liaison (36) peut être déplacé en rotation;
c) un poussoir déplaçable en va-et-vient (56) qui touche une extrémité de l'organe de liaison (36) pour déplacer l'organe de liaison (36) en rotation autour du pivot (38);
d) une première section d'application de force (40, 40a) située sur ledit organe de liaison (36) qui déconnecte les bornes de contact de la carte de mémoire (M) à partir des bornes de contact (22) du corps (10) de connecteur par déplacement de la plaque d'éjection (26) dans la direction de retrait lorsque l'élément de liaison (36) est déplacé en rotation par le poussoir (56); et
e) une seconde section d'application de force (44) située sur ledit organe de liaison (36) et qui continue à déplacer la carte de mémoire (M) dans la direction de retrait après que les bornes de la carte de mémoire (M) ont été déconnectées des bornes du connecteur, ladite première section d'application de force (40, 40a) étant située sur ledit organe de liaison (36) entre ledit pivot (38) et ladite seconde section d'application de force (44),
dans lequel ladite carte de mémoire (M) est déplacée initialement dans la direction de retrait par ladite patte d'engagement (32) de la plaque d'éjection (26),
**caractérisé en ce que**
après ledit déplacement initial dans la direction de retrait, ladite carte de mémoire (M) est déplacée plus loin dans la direction de retrait par ladite seconde section d'application de force (44), qui repousse directement la carte de mémoire (M).

2. Dispositif d'éjection (12) selon la revendication 1, **caractérisé en ce que** ledit élément de liaison (36) est une structure étagée comportant une section supérieure (36a) située d'un côté du pivot (38) et une section parallèle inférieure (36b) située de l'autre côté du pivot (38), et ladite plaque d'éjection (26) est une structure étagée inverse de celle de l'élément de liaison (36) et ladite plaque d'éjection (26) guide la section parallèle inférieure (36b) de l'organe de liaison (36) entre la plaque d'éjection (26) et le corps de connecteur (10).

3. Dispositif d'éjection (12) selon la revendication 1, **caractérisé en ce que** ladite plaque d'éjection (26) possède une ouverture approximativement rectangulaire (34) au centre d'étendue en largeur de la carte de mémoire (M) et ledit organe de liaison (36) possède un bossage (40) dirigé vers le haut, qui fait saillie dans l'ouverture (34), le bossage (40) dirigé vers le haut possédant des bords arqués (40a) incurvés avec une forme convexe dans les deux directions, dans lesquelles la carte de mémoire (M) est insérée et retirée.

4. Dispositif d'éjection (12) selon la revendication 1, **caractérisé en ce que** la seconde section d'application (44) est située sur ledit élément de liaison (36) à une distance égale au moins au double de la distance de la première section d'application de force (40, 40a) par rapport au pivot (38).

5. Dispositif d'éjection (12) selon la revendication 1, **caractérisé en ce que** la seconde section d'application de force (44) est située sur ledit élément de liaison (36) approximativement à une distance égale au triple de la distance de la première section d'application de force (40, 40a) par rapport au pivot (38).
